## Europäisches Patentamt
## European Patent Office
## Office européen des brevets

(11) Publication number: **0 159 799**
**B1**

---

(12) **EUROPEAN PATENT SPECIFICATION**

(45) Date of publication of patent specification: **22.11.90**

(51) Int. Cl.⁵: **F 16 K 5/20**

(21) Application number: **85301822.4**

(22) Date of filing: **15.03.85**

---

(54) **Ball valve.**

---

(30) Priority: **15.03.84 US 589920**

(43) Date of publication of application:
**30.10.85 Bulletin 85/44**

(45) Publication of the grant of the patent:
**22.11.90 Bulletin 90/47**

(84) Designated Contracting States:
**AT BE CH DE FR GB IT LI LU NL SE**

(56) References cited:
**EP-A-0 107 868
DE-C- 679 949
DE-C-1 122 788
FR-A-1 104 872
FR-A-2 383 369
US-A-2 233 074
US-A-2 577 725
US-A-4 273 152**

(73) Proprietor: **Varden, Arnold
8 Ottaway Avenue
Barrie Ontario (CA)**

(72) Inventor: **Varden, Arnold
8 Ottaway Avenue
Barrie Ontario (CA)**

(74) Representative: **Knott, Stephen Gilbert et al
MATHISEN, MACARA & CO. The Coach House
6-8 Swakeleys Road
Ickenham Uxbridge Middlesex UB10 8BZ (GB)**

Courier Press, Leamington Spa, England.

**Description for the Contracting States: AT, CH/LI, LU, SE**

This invention relates in general to the construction of valves and in particular to a new housing containing a closure member of the ball valve type wherein the closure member is carried on an eccentric so as to premit angular movement of the closure member about an axis and in addition, radial movement with respect to that axis.

The present invention relates to the construction of a ball or globe valve, particularly for use in shutting off pipelines and the like. Ball valves are known generally. They have several advantages including being relatively economical to manufacture and requiring relatively little maintenance. One of the disadvantages of ball valves is that the valves are often used on high pressure lines such as gas and oil transmission lines and thus require a significant amount of force between the ball and the seat against which the ball seals. Angular movement of the ball with respect to its seat causes failure of the seal whether the seal is carried by the ball or the seat. When the seal fails the pipeline must be shut down and the valve entirely disassembled to replace the seat.

Various attempts have been made to provide closure members of the ball valve type in which the closure member moves in a direction axial to the seat before any angular movement. Examples are found in US—A—2 577 725 and DE—C—1 122 788 in which the ball valves are eccentrically mounted in a yoke which is in turn pivotally mounted. In these arrangements, however, the initial axial movement is accompanied by rotational movement.

FR—A—2 383 369 and EP—A—107 868 (published too late on 09.05.84) disclose ball valves having operating means whereby the closure member may be sequentially rotated and translated. But while such valves have extended life there still remains the necessity of shutting down the pipeline and completely disassembling the valve in order to repair or inspect the seating surface.

According to the present invention there is provided a valve for use in a pipeline comprising a housing having an inlet, an outlet, and an internal chamber to accommodate a closure member, a closure member contained within said housing, said closure member being movable from a closed position blocking fluid flow through said valve to an open position permitting fluid flow through said valve, and operating means to move said closure member including main means to move said closure member angularly about an axis and auxiliary means movable relative to said main operating means to move said closure member radially with respect to said axis away from said closed position prior to said angular movement, said closure member and said housing having co-operating sealing means for sealing said inlet, said means to move said closure member angularly including an upper cylindrical main stem and a lower cylindrical main stem located on opposite sides of said closure member, characterised in that said housing is provided with an inspection port, in that said means to move said closure member radially includes an upper auxiliary stem and a lower auxiliary stem located on opposite sides of said closure member, and a connecting bar contained within said housing and connecting said upper auxiliary stem and said lower auxiliary stem so that said upper auxiliary stem and said lower auxiliary stem may be moved simultaneously, one auxiliary stem being cylindrical with an eccentric part journalled in first bearing means carried in said closure member and the other auxiliary stem being cylindrical with at least two parts one of which is concentric with respect to said stems of said main operating means and another part of which is cylindrical and has an axis eccentric with respect to said stems of said main operating means, said upper and lower stems of said main operating means each having a concentric bore to accommodate a respective stem of said auxiliary operating means.

The invention is further explained below and in the enclosed drawings in which:

Figure 1 is a vertical sectional view through a preferred embodiment of the invention,

Figure 2 is a horizontal sectional view taken along line 2-2 of Figure 1,

Figure 3 is a partial sectional view illustrating the device of Figure 1 in the open position permitting flow with the closure member sealed against the inspection port, and

Figure 4 is an exploded perspective view of the closure member and its operating mechanism.

Referring to the drawings in particular, the embodiment illustrated therein comprises a ball valve indicated generally at 10 comprising a main housing 12, and upper housing 14 and a closure member 16.

The main housing 12 comprises an inlet flange 18 and an outlet flange 20 in order that the ball valve may be connected to a pipeline in the standard fashion. The inlet flange and outlet flange together with the main housing respectively define inlets and outlets having passages for fluid flow.

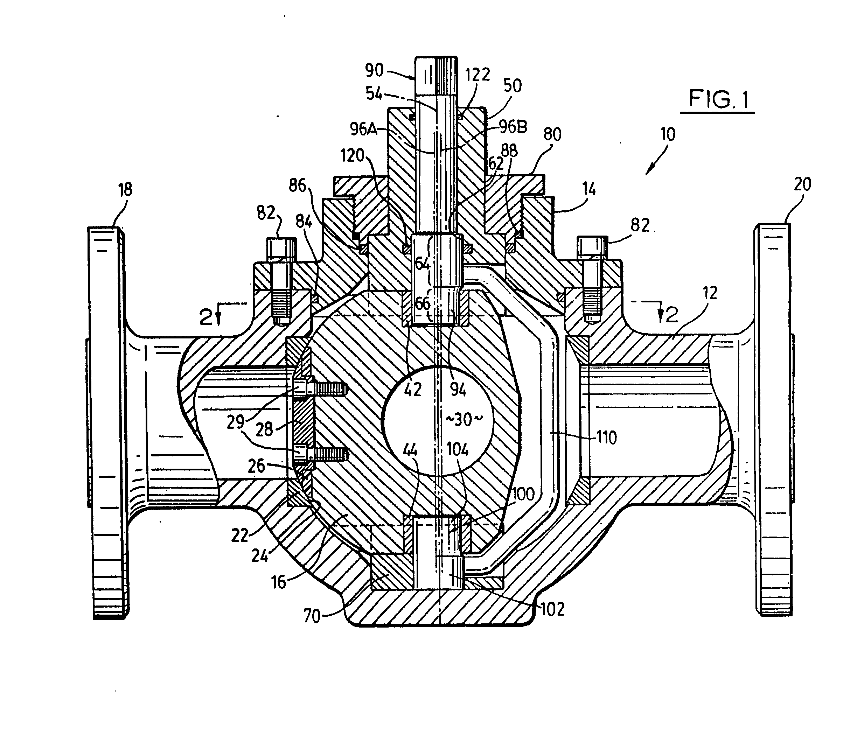

The main housing 12 comprises a valve seat 22 illustrated in Figure 1 against which the closure member seals to prevent flow along the fluid passage. The closure member 16 comprises a surface 24 for co-operating with the valve seat 22. The surface 24 has inset therein an annular neoprene main seal 26. Main seal 26 is maintained within the surface 24 of the closure member 16 by a main seal retainer 28 which is affixed to closure member 16 by means of countersunk bolts 29. The interaction between valve seat 22 and neoprene main seal 26 provides the main sealing interface between the closure member 16 and the main housing 12. In Figure 1 the valve is shown in the closed position.

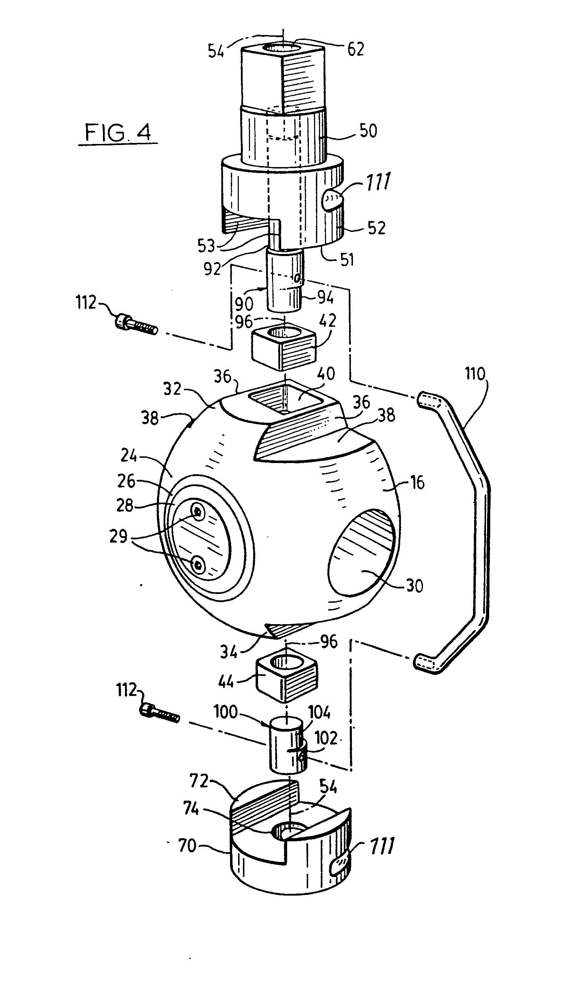

The closure member 16 is iullustrated in exploded perspective view in Figure 4. The closure member 16 comprises a central passage 30 extending therethrough for communication of fluid flow between the inlet and outlet portions of the housing. As shown in Figure 1 the passage 30 is of approximatley the same internal diameter as the inlet and outlet passages of main housing 12.

The closure member 16 is substantially spherical shaped in the region of the surface 24. The remainder of the surface may be relieved from the spherical outline to provide a lighter more compact and more inexpensive closure member. The upper and lower portions of the closure member 16 as illustrated in Figure 4 comprise boss structures 32 and 34 respectively. As illustrated in Figure 4 upper boss 32 is defined by a pair of flat surfaces 36 and a pair of flat surfaces at right angles thereto 38. Lower boss 34 is similarly defined by a pair of flat surfaces on either side and a second pair of flat surfaces at right angles thereto.

Upper boss 32 comprises a rectangular chamber 40 for receiving upper journal bearing 42. Upper journal bearing 42 is closely received by chamber 40 so as to preclude any relative movement therebetween.

Lower boss 34 also comprises a chamber, not visible, which chamber, similarly, closely receives lower journal bearing 44.

Angular motion of the closure member 16 about an axis is provided by movement of main stem 50. As illustrated in Figure 4 the end of main stem 50 adjacent closure member 16 comprises a cylindrical yoke 52 having a flat lower surface 51 and flat internal surfaces 53. The yoke 52 of main stem 50 is closely received by boss 32 so that the lower surface 51 of the main stem rests against surfaces 38 while the internal surfaces 53 of the yoke are closely adjacent surfaces 36. Thus rotation of the main stem about its axis 54 will rotate the closure member 16 about that same axis.

Lower main stem 70 is similarly provided with a yoke-shaped end 72 which accommodates lower boss 34. As illustrated in Figure 1 lower main stem 70 is rotatably received in main housing 12 to support and locate the closure member 16. Upper main stem 50 is received in and located by upper housing 14 thus providing support for the closure member 16. The upper main stem is retained in upper housing 14 by means of threaded cap 80 which is threadedly received in upper housing 14.

Upper housing 14 is retained in main housing 12 by means of bolts 82. An O-ring seal 84 on upper housing 14 serves to seal upper housing 14 to main housing 12. A pair of seals or gaskets 86 and 88 are compressed by the end cap 80 and serve to seal end cap 80 to upper housing 14.

From reference to Figures 1 and 4 it will be appreciated that main stem 50 comprises a hollow bore 62 the upper part of which is co-axial with axis 54. The mid portion 64 of bore 62 comprises a bore or larger diameter. The lowermost portion 66 of bore 62 comprises an eccentric bore having an axis offset from and parallel to axis 54.

An upper auxiliary stem 90 is provided in order to achieve radial motion of the closure member 16 with respect to axis 54. The upper auxiliary stem 90 comprises a cylindrical shaft which is receivable in bore 62. The uppermost portion 92 is concentric with axis 54. The lowermost portion 94 of the upper auxiliary stem 90 comprises a cylindrical shaft with the axis 96 of this lower portion parallel to but spaced from the axis 54 thereby providing an eccentric. The lowermost portion 94 of the upper auxiliary stem 90 is closely received within a bore in upper journal bearing 42.

The lower main stem 70 also comprises a central bore 74 which bore is co-axial with axis 54. Lower auxiliary stem 100 comprises a first cylindrical portion 102 which is received within bore 74 of lower main stem 70. The lower auxiliary stem 100 also comprises an upper cylindrical portion 104 which is co-axial with axis 96. The upper cylindrical portion 104 of lower auxiliary stem 100 is received within the bore of the lower journal bearing 44.

Upper auxiliary stem 90 is connected to lower auxiliary stem 100 by means of connecting bar 110. Connecting bar 110 is affixed to upper auxiliary stem 90 and lower auxiliary stem 100 by means of bolts 112. These bolts have not been illustrated in Figure 1 in order to provide further clarity of the bearing details in that sectional view.

In order to understand the operation of the operating means, reference should be had to Figure 1. In Figure 1 the valve is shown in the closed position. In order to open the valve a suitable valve wrench is applied to upper auxiliary stem 90 to turn upper auxiliary stem 90 about axis 54 approximately 1/2 turn. Movement of upper auxiliary stem 90 will cause similar movement of lower auxiliary stem 100 as these stems are interconnected by the connecting bar 110. Upper main stem 50 and lower main stem 74 each comprise a horizontal slot 111 to accommodate the movement of connecting bar 110. [In Figure 1 the closure member is shown in the closed position but connecting bar is shown in the "half way" position so as to show the connecting bar more clearly.] Each of upper auxiliary stem 90 and lower auxiliary stem 100 will achieve angular movement about axis 54 as upper auxiliary stem 90 is received within the main stem 50 and lower auxiliary stem 100 is received within lower main stem 70. The lowermost portion 94 of upper auxiliary stem will thus move eccentrically about axis 54. The uppermost portion 104 of lower auxiliary stem 100 will similarly move eccentrically about axis 54. In Figure 1 the numeral 96A is used to designate the axis 96 of portions 94 and 104 when in the closed position while the numeral 96B is used to denote the position of the axis 96 following movement of auxiliary stems 90 and 100. The movement of portions 94 and 104 from position 96A to 96B causes movement of the journal bearings 42 and 44 to the right in Figure 1. As the journal bearings 42 and 44 are tightly received within the closure member 16, the closure member 16 must also move to the right a similar distance. The closure member 16 is free to move to the right under such motion by sliding the bosses 32 and 34 to the right within yoke 52 of main stem 50 and yoke 72 of lower main stem 70. Accordingly the closure member 16 will be drawn to the right in Figure 1 so that the annular seal 26 is withdrawn from the valve seat 22. This is achieved by approximately 180 degrees rotation of the upper auxiliary stem 90.

The second stage in the opening of the valve is the rotation of the main stem 50. Rotation of the main stem 50 through an angle of approximately 90 degrees will cause rotation of the closure member 16 about axis 54 to bring the passage 30 into registration with the inlet and outlet passages of the housing. Thus the valve is in the opened position with fluid flowing through the housing and the closure member 12 not sealed against either the inlet or outlet passages. When in this configuration fluid pressure will fill the housing but there will be no substantial flow around the exterior surface of the closure member 16. Leakage of fluid along the bore 66 of the main stem is prevented by O-ring seals 120 and 122 illustrated in Figure 1.

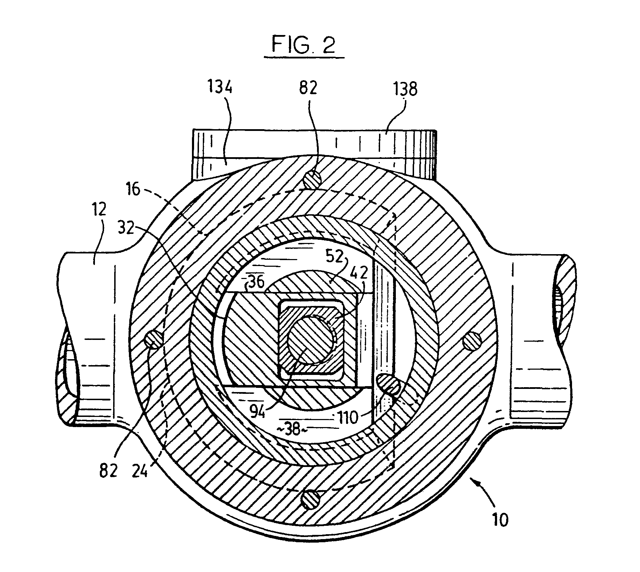

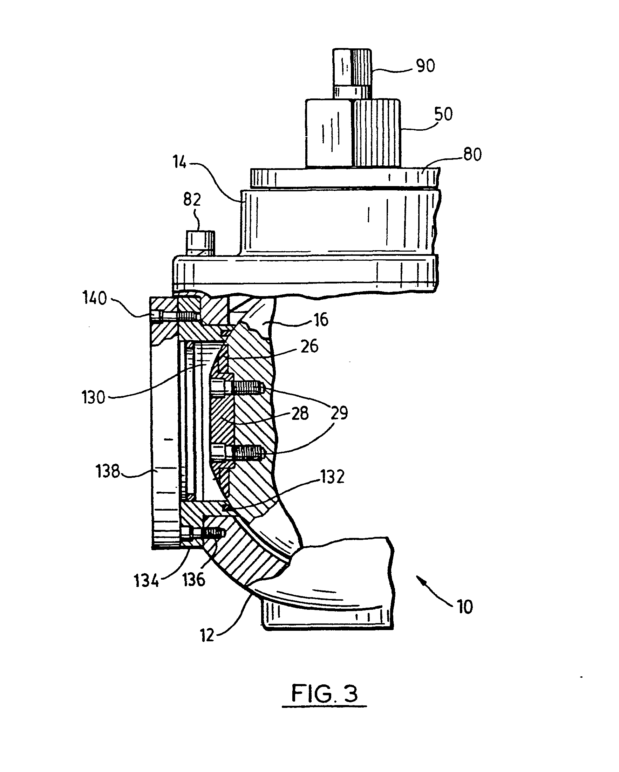

Figure 3 illustrates the valve with the closure member 16 in the position to be inspected. When the valve is in the open position with passage 30 registering with the inlet and outlet passages of the housing 12 the upper auxiliary stem 90 may be moved back through 180 degrees. Such movement will cause radial movement of the closure member 16 with respect to axis 54 toward the maintenance port 130. Figure 2 illustrates that the maintenance port 130 is most advantageously at an angle of 90 degrees to the inlet and outlet passages. When the closure member 16 is moved toward the maintenance port 130 a portion of the surface 24 seats against a maintenance seal 132. Maintenance seal 132 is an annular member set into the surface of a maintenance seal retainer 134. Maintenance seal retainer 134 is affixed to main housing 12 by means of countersunk bolts 136. The maintenance port is closed by means of a maintenance cover plate 138 which is affixed to the maintenance seal retainer by means of countersunk bolts 140.

It will be observed by reference to Figure 3 that the maintenance port 130 is of larger diameter than the main seal 26. When inspection or replacement of main seal 26 is required the closure member 16 is moved to the position illustrated in Figure 3. Maintenance cover plate 138 is removed by removing countersunk bolts 140. The main seal 26 may then be inspected by viewing through maintenance port 130. If replacement of the main seal is required the bolts 29 may be removed in order that the main seal retainer 28 can be taken out. Upon removal of the bolts 29 and the main seal retainer 28 the main seal 26 may be replaced.

As the closure member 16 is sealed against the maintenance seal 132 the chore of inspecting and replacing the main seal 26 is conducted while the valve is in the open position and fluid is flowing through the pipeline. Thus, the device of this invention provides a mechanism by means of which the main seal may be inspected and replaced without the necessity of shutting down the pipeline.

It is expected that the maintenance seal 132 will have particularly long life. However, if it becomes necessary to replace maintenance seal 132 then the valve must be moved to the closed position illustrated in Figure 1. When in the position illustrated in Figure 1 the maintenance cover plate may be removed and the maintenance seal retainer may be removed by removing countersunk bolts 136. The maintenance seal 132 may then be replaced in the maintenance seal retainer 134.

Assembly of the entire device may be appreciated with reference to Figure 4. The valve seat 22 is first placed in position within the main housing 12. Next the lower main stem 70 is inserted into housing 12.

The next step in the assembly process is to subassemble the closure member and the upper and lower auxiliary stem. Firstly, the lower journal bearing 44 and the upper journal bearing 42 are placed in the bosses 34 and 32 respectively. Then lower auxiliary stem 100 is seated within the lower journal bearing 44. This is followed by insertion of upper auxiliary stem 90 into upper journal bearing 42. Connecting bar 110 is then bolted to the upper auxiliary stem 90 and the lower auxiliary stem 100 using bolts 112. At this time, the subassembly may then be inserted in the main housing 12 with the lower auxiliary stem 100 being seated in the lower main stem 70 and the boss 34 being received within the yoke 72.

With the subassembly in place the upper main stem 50 may be passed downwardly over the upper auxiliary stem 90 with the yoke 52 of the upper main stem 50 straddling the boss 32. Thereafter the housing may be closed by bolting the upper housing 14 in place and then screwing on end cap 80.

The maintenance port may be disassembled and assembled as indicated above at any time as convenient.

**Description for the Contracting States: BE, DE, FR, IT, NL, GB**

This invention relates in general to the construction of valves and in particular to a new housing containing a closure member of the ball valve type wherein the closure member is carried on an eccentric so as to permit angular movement of the closure member about an axis and in addition, radial movement with respect to that axis.

The present invention relates to the construction of a ball or globe valve, particularly for use in shutting off pipelines and the like. Ball valves are known generally. They have several advantages including being relatively economical to manufacture and requiring relatively little maintenance.

One of the disadvantages of ball valves is that the valves are often used on high pressure lines such as gas and oil transmission lines and thus require a significant amount of force between the ball and the seat against which the ball seals. Angular movement of the ball with respect to its seat causes failure of the seal whether the seal is carried by the ball or the seat. When the seal fails the pipeline must be shut down and the valve entirely disassembled to replace the seat.

Various attempts have been made to provide closure members of the ball valve type in which the closure member moves in a direction axial to the seat before any angular movement. Examples are found in US—A—2 577 725 and DE—C—1 122 788 in which the ball valves are eccentrically mounted in a yoke which is in turn pivotally mounted. In these arrangements, however, the initial axial movement is accompanied by rotational movement.

FR—A—2 383 369 and EP—A—107 868 (published too late on 09.05.84) disclose ball valves having operating means whereby the closure member may be sequentially rotated and translated. But while such valves have extended life there still remains the necessity of shutting down the pipeline and completely disassemblying the valve in order to repair or inspect the seating surface.

According to the present invention there is provided a valve for use in a pipeline comprising a housing having an inlet, an outlet, and an internal chamber to accommodate a closure member, a closure member contained within said housing, said closure member being movable from a closed position blocking fluid flow through said valve to an open position permitting fluid flow through said valve, and operating means to move said closure member including main means to move said closure member angularly about an axis and auxiliary means movable relative to said main operating means to move said closure member radially with respect to said axis away from said closed position prior to said angular movement, said closure member and said housing having co-operating sealing means for sealing said inlet, said means to move said closure member angularly including an upper cylindrical main stem and a lower cylindrical main stem located on opposite sides of said closure member, characterised in that said housing is provided with an inspection port, in that said means to move said closure member radially includes an upper auxiliary stem and a lower auxiliary stem located on opposite sides of said closure member, and a connecting bar contained within said housing and connecting said upper auxiliary stem and said lower auxiliary stem so that said upper auxiliary stem and said lower auxiliary stem may be moved simultaneously, one auxiliary stem being cylindrical with an eccentric part journalled in first bearing means carried in said closure member and the other auxiliary stem being cylindrical with at least two parts one of which is concentric with respect to said stems of said main operating means and another part of which is cylindrical and has an axis eccentric with respect to said stems of said main operating means, said upper and lower stems of said main operating means each having a concentric bore to accommodate a respective stem of said auxiliary operating means, and in that each said stem of said main operating means has a yoke end portion for accommodating a boss of said closure member whereby said boss slides within said yoke on radial movement of said closure member with respect to said axis.

The invention is further explained below and in the enclosed drawings in which:

Figure 1 is a vertical sectional view through a preferred embodiment of the invention,

Figure 2 is a horizontal sectional view taken along line 2-2 of Figure 1,

Figure 3 is a partial sectional view illustrating the device of Figure 1 in the open position permitting flow with the closure member sealed against the inspection port, and

Figure 4 is an exploded perspective view of the closure member and its operating mechanism.

Referring to the drawings in particular, the embodiment illustrated therein comprises a ball valve indicated generally at 10 comprising a main housing 12, and upper housing 14 and a closure member 16.

The main housing 12 comprises an inlet flange 18 and an outlet flange 20 in order that the ball valve may be connected to a pipeline in the standard fashion. The inlet flange and outlet flange together with the main housing respectively define inlets and outlets having passages for fluid flow.

The main housing 12 comprises a valve seat 22 illustrated in Figure 1 against which the closure member seals to prevent flow along the fluid passage. The closure member 16 comprises a surface 24 for co-operating with the valve seat 22. The surface 24 has inset therein an annular neoprene main seal 26. Main seal 26 is maintained within the surface 24 of the closure member 16 by a main seal retainer 28 which is affixed to closure member 16 by means of countersunk bolts 29. The interaction between valve seat 22 and neoprene main seal 26 provides the main sealing interface between the closure member 16 and the main housing 12. In Figure 1 the valve is shown in the closed position.

The closure member 16 is illustrated in exploded perspective view in Figure 4. The closure member 16 comprises a central passage 30 extending therethrough for communication of fluid flow between the inlet and outlet portions of the housing. As shown in Figure 1 the passage 30 is of approximately the same internal diameter as the inlet and outlet passages of main housing 12.

The closure member 16 is substantially spherical shaped in the region of the surface 24. The remainder of the surface may be relieved from the spherical outline to provide a lighter more compact and more inexpensive closure member. The upper and lower portions of the closure member 16 as illustrated in Figure 4 comprise boss structures 32 and 34 respectively. As illustrated in Figure 4 upper boss 32 is defined by a pair of flat surfaces 36 and a pair of flat surfaces at right angles thereto 38. Lower boss 34 is similarly defined by a pair of flat surfaces on either side and a second pair of flat surfaces at right angles thereto.

Upper boss 32 comprises a rectangular chamber 40 for receiving upper journal bearing 42. Upper journal bearing 42 is closely received by chamber 40 so as to preclude any relative movement therebetween.

Lower boss 34 also comprises a chamber, not visible, which chamber, similarly, closely receives lower journal bearing 44.

Angular motion of the closure member 16 about an axis is provided by movement of main stem 50. As illustrated in Figure 4 the end of main stem 50 adjacent closure member 16 comprises a cylindrical yoke 52 having a flat lower surface 51 and flat internal surfaces 53. The yoke 52 of main stem 50 is closely received by boss 32 so that the lower surface 51 of the main stem rests against surfaces 38 while the internal surfaces 53 of the yoke are closely adjacent surfaces 36. Thus rotation of the main stem about its axis 54 will rotate the closure member 16 about that same axis.

Lower main stem 70 is similarly provided with a yoke-shaped end 72 which accommodates lower boss 34. As illustrated in Figure 1 lower main stem 70 is rotatably received in main housing 12 to support and locate the closure member 16. Upper main stem 50 is received in and located by upper housing 14 thus providing support for the closure member 16. The upper main stem is retained in upper housing 14 by means of threaded cap 80 which is threadedly received in upper housing 14.

Upper housing 14 is retained in main housing 12 by means of bolts 82. An O-ring seal 84 on upper housing 14 serves to seal upper housing 14 to main housing 12. A pair of seals or gaskets 86 and 88 are compressed by the end cap 80 and serve to seal end cap 80 to upper housing 14.

From reference to Figures 1 and 4 it will be appreciated that main stem 50 comprises a hollow bore 62 the upper part of which is co-axial with axis 54. The mid portion 64 of bore 62 comprises a bore of larger diameter. The lowermost portion 66 of bore 62 comprises an eccentric bore having an axis offset from and parallel to axis 54.

An upper auxiliary stem 90 is provided in order to achieve radial motion of the closure member 16 with respect to axis 54. The upper auxiliary stem 90 comprises a cylindrical shaft which is receivable in bore 62. The uppermost portion 92 is concentric with axis 54. The lowermost portion 94 of the upper auxiliary stem 90 comprises a cylindrical shaft with the axis 96 of this lower portion parallel to but spaced from the axis 54 thereby providing an eccentric. The lowermost portion 94 of the upper auxiliary stem 90 is closely received within a bore in upper journal bearing 42.

The lower main stem 70 also comprises a central bore 74 which bore is co-axial with axis 54. Lower auxiliary stem 100 comprises a first cylindrical portion 102 which is received within bore 74 of lower main stem 70. The lower auxiliary stem 100 also comprises an upper cylindrical portion 104 which is co-axial with axis 96. The upper cylindrical portion 104 of lower auxiliary stem 100 is received within the bore of the lower journal bearing 44.

Upper auxiliary stem 90 is connected to lower auxiliary stem 100 by means of connecting bar 110. Connecting bar 110 is affixed to upper auxiliary stem 90 and lower auxiliary stem 100 by means of bolts 112. These bolts have not been illustrated in Figure 1 in order to provide further clarity of the bearing details in that sectional view.

In order to understand the operation of the operating means, reference should be had to Figure 1.

In Figure 1 the valve is shown in the closed position. In order to open the valve a suitable valve wrench is applied to upper auxiliary stem 90 to turn upper auxiliary stem 90 about axis 54 approximately 1/2 turn. Movement of upper auxiliary stem 90 will cause similar movement of lower auxiliary stem 100 as these stems are interconnected by the connecting bar 110. Upper main stem 50 and lower main stem 74 each comprise a horizontal slot 111 to accommodate the movement of connecting bar 110. [In Figure 1 the closure member is shown in the closed position but connecting bar is shown in the "half way" position so as to show the connecting bar more clearly.] Each of upper auxiliary stem 90 and lower auxiliary stem 100 will achieve angular movement about axis 54 as upper auxiliary stem 90 is received within the main stem 50 and lower auxiliary stem 100 is received within lower main stem 70. The lowermost portion 94 of upper auxiliary stem will thus move eccentrically about axis 54. The uppermost portion 104 of lower auxiliary stem 100 will similarly move eccentrically about axis 54. In Figure 1 the numeral 96A is used to designate the axis 96 of portions 94 and 104 when in the closed position while the numeral 96B is used to denote the position of the axis 96 following movement of auxilary stems 90 and 100. The movement of portions 94 and 104 from position 96A to 96B causes movement of the journal bearings 42 and 44 to the right in Figure 1. As the journal bearings 42 and 44 are tightly received within the closure member 16, the closure member 16 must also move to the right a similar distance. The closure member 16 is free to move to the right under such motion by sliding the bosses 32 and 34 to the right within yoke 52 of main stem 50 and yoke 72 of lower main stem 70. Accordingly the closure member 16 will be drawn to the right in Figure 1 so that the annular seal 26 is withdrawn from the valve seat 22. This is achieved by approximately 180 degrees rotation of the upper auxiliary stem 90.

The second stage in the opening of the valve is the rotation of the main stem 50. Rotation of the main stem 50 through an angle of approximately 90 degrees will cause rotation of the closure member 16 about axis 54 to bring the passage 30 into registration with the inlet and outlet passages of the housing. Thus the valve is in the opened position with fluid flowing through the housing and the closure member 12 not sealed against either the inlet or outlet passages. When in this configuration fluid pressure will fill the housing but there will be no substantial flow around the exterior surface of the closure member 16. Leakage of fluid along the bore 66 of the main stem is prevented by O-ring seals 120 and 122 illustrated in Figure 1.

Figure 3 illustrates the valve with the closure member 16 in the position to be inspected. When the valve is in the open position with passage 30 registering with the inlet and outlet passages of the housing 12 the upper auxiliary stem 90 may be moved back through 180 degrees. Such movement will cause radial movement of the closure member 16 with respect to axis 54 toward the maintenance port 130. Figure 2 illustrates that the maintenance port 130 is most advantageously at an angle of 90 degrees to the inlet and outlet passages. When the closure member 16 is moved toward the maintenance port 130 a portion of the surface 24 seats against a maintenance seal 132. Maintenance seal 132 is an annular member set into the surface of a maintenance seal retainer 134. Maintenance seal retainer 134 is affixed to main housing 12 by means of countersunk bolts 136. The maintenance port is closed by means of a maintenance cover plate 138 which is affixed to the maintenance seal retainer by means of countersunk bolts 140.

It will be observed by reference to Figure 3 that the maintenance port 130 is of larger diameter than the main seal 26. When inspection or replacement of main seal 26 is required the closure member 16 is moved to the position illustrated in Figure 3. Maintenance cover plate 138 is removed by removing countersunk bolts 140. The main seal 26 may then be inspected by viewing through maintenance port 130. If replacement of the main seal is required the bolts 29 may be removed in order that the main seal retainer 28 can be taken out. Upon removal of the bolts 29 and the main seal retainer 28 the main seal 26 may be replaced.

As the closure member 16 is sealed against the maintenance seal 132 the chore of inspecting and replaceing the main seal 26 is conducted while the valve is in the open position and fluid is flowing through the pipeline. Thus, the device of this invention provides a mechanism by means of which the main seal may be inspected and replaced without the necessity of shutting down the pipeline.

It is expected that the maintenance seal 132 will have particularly long life. However, if it becomes necessary to replace maintenance seal 132 then the valve must be moved to the closed position illustrated in Figure 1. When in the position illustrated in Figure 1 the maintenance cover plate may be removed and the maintenance seal retainer may be removed by removing countersunk bolts 136. The maintenance seal 132 may then be replaced in the maintenance seal retainer 134.

Assembly of the entire device may be appreciated with reference to Figure 4. The valve seat 22 is first placed in position within the main housing 12. Next the lower main stem 70 is inserted into housing 12.

The next step in the assembly process is to subassemble the closure member and the upper and lower auxiliary stem. Firstly, the lower journal bearing 44 and the upper journal bearing 42 are placed in the bosses 34 and 32 respectively. Then lower auxiliary stem 100 is seated within the lower journal bearing 44. This is followed by insertion of upper auxiliary stem 90 into upper journal bearing 42. Connecting bar 110 is then bolted to the upper auxiliary stem 90 and the lower auxiliary stem 100 using bolts 112. At this time, the subassembly may then be inserted in the main housing 12 with the lower auxiliary stem 100 being seated in the lower main stem 70 and the boss 34 being received within the yoke 72.

With the subassembly in place the upper main stem 50 may be passed downwardly over the upper auxiliary stem 90 with the yoke 52 of the upper main stem 50 straddling the boss 32. Thereafter the housing may be closed by bolting the upper housing 14 in place and then screwing on end cap 80.

The maintenance port may be disassembled and assembled as indicated above at any time as convenient.

**Claims for the Contracting States: AT, CH/LI, LU, SE**

1. A valve for use in a pipeline comprising a housing (12) having an inlet (18), an outlet (20), and an internal chamber to accommodate a closure member (16), a closure member (16) contained within said housing (12), said closure member (16) being movabe from a closed position blocking fluid flow through said valve to an open position permitting fluid flow through said valve, and operating means to move said closure member (16) including main means to move said closure member (16) angularly about an axis (54) and auxiliary means movable relative to said main operating means to move said closure member (16) radially with respect to said axis (54) away from said closed position prior to said angular movement, said closure member (16) and said housing (12) having co-operating sealing means (22, 26) for sealing said inlet (18), said means to move said closure member (16) angularly including an upper cylindrical main stem (50) and a lower cylindrical main stem (70) located on opposite sides of said closure member (16), characterised in that said housing (12) is provided with an inspection port (130), in that said means to move said closure member (16) radially includes an upper auxiliary stem (90) and a lower auxiliary stem (100) located on opposite sides of said closure member (16), and a connecting bar (110) contained within said housing (12) and connecting said upper auxiliary stem (90) and said lower auxiliary stem (100) so that said upper auxiliary stem (90) and said lower auxiliary stem (100) may be moved simultaneously, one auxiliary stem (90, 100) being cylindrical with an eccentric part (94, 104) journalled in first bearing means (42, 44) carried in said closure member (16) and the other auxiliary stem (100, 90) being cylindrical with at least two parts one of which (102, 92) is concentric with respect to said stems (70, 50) of said main operating means and another part (104, 94) of which is cylindrical and has an axis (96) eccentric with respect to said stems (70, 50) of said main operating means, said upper (50) and lower (70) stems of said main operating means each having a concentric bore (62, 74) to accommodate a respective stem (90, 100) of said auxiliary operating means.

2. A valve according to claim 1 characterised in that said sealing means includes a replaceable seal (26) carried in the closure member (16) for co-operating with said housing (12) for sealing said inlet (18) and movement of said operating means causing angular movement of said closure member (16) about said axis (54) to being said replaceable seal (26) into alignment with said inspection port (130) whereby said replaceable seal (26) may be replaced through said inspection port (130).

3. A valve according to claim 1 or claim 2 characterised in that said closure member (16) comprises a surface (24) for co-operatively sealing against said inspection port (130).

4. A valve according to any preceding claim characterised in that said valve comprises a maintenance seal retaining member (134) mounted in said inspection port (130) of said housing (12), a maintenance seal (132) carried by said maintenance seal retaining member (134), said maintenance seal (132) being adapted to seal against said closure member (16), and a cover plate (138) for sealing said inspection port (130).

5. A valve according to claim 4 characterised in that said closure member (16) is provided with a sealing surface (24), a first portion of said sealing surface (24) comprising an annular main seal (26) for sealing against said inlet (18), a second portion concentric with said annular seal (26) for sealing against said maintenance seal (132); said maintenance seal (132) comprising an annular member having an inner diameter larger than the outer diameter of said annular main seal (26).

6. A valve according to any preceding claim characterised in that said closure member (16) comprises a boss (32, 34) for accommodating said main operating means, each said stem (50, 70) of said main operating means having a yoke end portion (52, 72) for accommodating said boss (32, 34) of said closure member (16) whereby on radial movement of said closure member (16) with respect to said axis (54), said boss (32, 34) may slide within said yoke (52, 72).

7. A valve according to any preceding claim characterised in that each said main stem (50, 70) defines a slot (111) to accommodate movement of said connecting bar (110) upon relative movement of said auxiliary stems (90, 100) with respect to said main stems (50, 70).

**Claims for the Contracting States: BE, DE, FR, IT, NL, GB**

1. A valve for use in a pipeline comprising a housing (12) having an inlet (18), an outlet (20), and an internal chamber to accommodate a closure member (16), a closure member (16) contained within said housing (12), said closure member (16) being movable from a closed position blocking fluid flow through said valve to an open position permitting fluid flow through said valve, and operating means to move said closure member (16) including main means to move said closure member (16) angularly about an axis (54) and auxiliary means movable relative to said main operating means to move said closure member (16) raidally with respect to said axis (54) away from said closed position prior to said angular movement, said closure member (16) and said housing (12) having co-operating sealing means (22, 26) for sealing said inlet (18), said means to move said closure member (16) angularly including an upper cylindrical main stem (50) and a lower cylindrical main stem (70) located on opposite sides of said closure member (16), characterised in that said housing (12) is provided with an inspection port (130), in that said means to move said closure member (16) radially includes an upper auxiliary stem (90) and a lower auxiliary stem (100) located on opposite sides of said closure member (16), and a connecting bar (110) contained within said housing (12) and connecting said upper auxiliary stem (90) and said lower auxiliary stem (100) so that said upper auxiliary stem (90) and said lower auxiliary stem (100) may be moved simultaneously, one auxiliary stem (90, 100) being cylindrical with an eccentric part (94, 104) journalled in first bearing means (42, 44) carried in said closure member (16) and the other auxiliary stem (100, 90) being cylindrical with at least two parts one of which (102, 92) is concentric with respect to said stems (70, 50) of said main operating means and another part (104, 94) of which is cylindrical and has an axis (96) eccentric with respect to said stems (70, 50) of said main operating means, said upper (50) and lower (70) stems of said main operating means each having a concentric bore (62, 74) to accommodate a respective stem (90, 100) of said auxiliary operating means, and in that each said stem (50, 70) of said main operating means has a yoke end portion (52, 72) for accommodating a boss (32, 34) of said closure member (16) whereby said boss (32, 34) slides within said yoke (52, 72) on radial movement of said closure member (16) with respect to said axis (54).

2. A valve according to claim 1 characterised in that said sealing means includes a replaceable seal (26) carried in the closure member (16) for co-operating with said housing (12) for sealing said inlet (18) and movement of said operating means causing angular movement of said closure member (16) about said axis (54) to bring said replaceable seal (26) into alignment with said inspection port (130) whereby said replaceable seal (26) may be replaced through said inspection port (130).

3. A valve according to claim 1 or claim 2 characterised in that said closure member (16) comprises a surface (24) for co-operatively sealing against said inspection port (130).

4. A valve according to any preceding claim characterised in that said valve comprises a maintenance seal retaining member (134) mounted in said inspection port (130) of said housing (12), a maintenance seal (132) carried by said maintenance seal retaining member (134), said maintenance seal (132) being adapted to seal against said closure member (16), and a cover plate (138) for sealing said inspection port (130).

5. A valve according to claim 4 characterised in that said closure member (16) is provided with a sealing surface (24), a first portion of said sealing surface (24) comprising an annular main seal (26) for sealing against said inlet (18), a second portion concentric with said annular seal (26) for sealing against said maintenance seal (132); said maintenance seal (132) comprising an annular member having an inner diameter larger than the outer diameter of said annular main seal (26).

6. A valve according to any preceding claim characterised in that each said main stem (50, 70) defines a slot (111) to accommodate movement of said connecting bar (110) upon relative movement of said auxiliary stems (90, 100) with respect to said main stems (50, 70).

**Patentansprüche für die Vertragsstaaten: AT, CH/LI, LU, SE**

1. Ventil zur Verwendung in einer Ölleitung, bestehend aus einem Gehäuse (12) mit einem Einlaß (18), einem Auslaß (20) und einer Innenkammer zur Aufnahme eines in dem Gehäuse (12) enthaltenen Verschlußgliedes (16), das aus einer den Fluidstrom durch das Ventil sperrenden Schließstellung in eine den Fluidstrom durch das Ventil freigebende Offenstellung bewegbar ist, und aus einer Betätigungsvorrichtung zur Bewegung des Verschlußgliedes (16), mit einer Hauptvorrichtung zur winkelmäßigen Bewegung des Verschlußgliedes (16) um einer Achse (54) und mit einer bezüglich der Hauptbetätigungsvorrichtung bewegbaren Hilfsvorrichtung zur Bewegung des Verschlußgliedes (16) bezüglich der Achse (54) radial aus der Schließstellung vor der winkelmäßigen Bewegung, wobei das Verschlußglied (16) und das Gehäuse (12) zusammenwirkende Dichtungseinrichtungen (22, 26) zur Abdichtung des Einlasses (18) aufweisen, die Vorrichtung zur winkelmäßigen Bewegung des Verschlußgliedes (16) einen oberen zylindrischen Hauptschaft (50) und einen unteren zylindrischen Hauptschaft (70) aufweist, die an einander gegenüberliegenden Seiten des Verschlußgliedes (16) angeordnet sind, dadurch gekennzeichnet, daß das Gehäuse (12) mit einer Inspektionsöffnung (130) versehen ist, daß die Vorrichtung zur radialen Bewegung des Verschlußgliedes (16) einen oberen Hilfsschaft (90) und einen unteren Hilfsschaft (100), die an einenander gegenüberliegenden Seiten des Verschlußgliedes (16) angeordnet sind, und eine Verbindungsstange (110) aufweist, die im Gehäuse (12) enthalten ist und den oberen Hilfsschaft (90) mit dem unteren Hilfsschaft (100) derart verbindet, daß der obere Hilfsschaft (90) und der untere Hilfsschaft (100) gleichzeitig bewegbar sind, wobei einer der Hilfsschäfte (90, 100) zylindrisch und mit einem in einer im Verschlußglied (16) gelagerten ersten Lagereinrichtung (42, 44) gelagerten Exzenterteil (94, 104) ausgebildet ist und der andere Hilfsschaft (100, 90) zylindrisch und mit wenigstens zwei Teilen ausgebildet ist, von denen einer (102, 92) bezüglich der Schäfte (70, 50) der Hauptbetätigungsvorrichtung konzentrisch und ein anderer Teil (104, 94) zylindrisch ist sowie eine Achse (96) besitzt, die bezüglich der Schäfte (70, 50) der Hauptbetätigungsvorrichtung exzentrisch ist, und wobei der obere (50) und der untere (70) Schaft der Hauptbetätigungsvorrichtung jeweils eine konzentrische Bohrung (62, 74) zur Aufnahme des betreffenden Schaftes (90, 100) der Hilfsbetätigungsvorrichtung aufweisen.

2. Ventil nach Anspruch 1, dadurch gekennzeichnet, daß die Dichtungseinrichtungen eine vom Verschlußglied (16) getragene austauschbare Dichtung (26) zum Zusammenwirken mit dem Gehäuse (12) zur Abdichtung des Einlasses (18) aufweist und eine Bewegung der Betätigungsvorrichtung eine winkelmäßige Bewegung des Verschlußgliedes (16) um die Achse (54) bewirkt, um die austauschbare Dichtung (26) mit der Inspektionsöffnung (130) zum Fluchten zu bringen, wobei die austauschbare Dichtung (26) durch die Inspektionsöffnung (130) austauschbar ist.

3. Ventil nach Anspruch 1 oder 2, dadurch gekennzeichnet, daß das Verschlußglied (16) eine Fläche (24) zur zusammenwirkenden dichten Anlage an der Inspektionsöffnung (130) aufweist.

4. Ventil nach den Ansprüchen 1 bis 3, dadurch gekennzeichnet, daß das Ventil ein in der Inspektionsöffnung (130) des Gehäuses (12) montiertes Halteglied (134) für eine Wartungsdichtung, eine von dem Halteglied (134) getragene, zur dichten Anlage an dem Verschlußglied (16) ausgebildete Wartungsdichtung (132) und eine Deckelplatte (138) zur Abdichtung der Inspektionsöffnung (130) aufweist.

5. Ventil nach Anspruch 4, dadurch gekennzeichnet, daß das Verschlußglied (16) mit einer Dichtfläche (24) versehen ist, von der ein erster Abschnitt eine ringförmige Hauptdichtung (26) zur Anlage am Einlaß (18) bildet und ein zur Hauptdichtung (26) konzentrischer zweiter Abschnitt zur dichten Anlage an der Wartungsdichtung (132) dient, welche Wartungsdichtung (132) aus einem Ringglied besteht, dessen Innendurchmesser größer als der Außendurchmesser der ringförmigen Hauptdichtung (26) ist.

6. Ventil nach den Ansprüchen 1 bis 5, dadurch gekennzeichnet, daß das Verschlußglied (16) Ansätze (32, 34) zur Aufnahme der Hauptbetätigungsvorrichtung jeder Schaft (50, 70) der Hauptbetätigungsvorrichtung einen jochförmigen Endteil (52, 72) zur Aufnahme eines Ansatzes (32, 34) des Verschlußgliedes (16) aufweist, wobei bei einer radialen Bewegung des Verschlußgliedes (16) bezüglich der Achse (54) die Ansätze (32, 34) in den Jochen (52, 72) gleiten.

7. Ventil nach den Ansprüchen 1 bis 6, dadurch gekennzeichnet, daß jeder Hauptschaft (50, 70) einen Schlitz (111) zur Beweglichkeit der Verbindungsstange (110) bei einer Relativbewegung der Hilfsschäfte (90, 100) bezüglich der Hauptschäfte (50, 70) begrenzt.

**Patentansprüche für die Vertragsstaaten: BE, DE, FR, IT, NL, GB**

1. Ventil zur Verwendung in einer Ölleitung, bestehend aus einem Gehäuse (12) mit einem Einlaß (18), einem Auslaß (20) und einer Innenkammer zur Aufnahme eines in dem Gehäuse (12) enthaltenen Verschlußgliedes (16), das aus einer den Fluidstrom durch das Ventil sperrenden Schließstellung in eine den Fluidstrom durch das Ventil freigebende Offenstellung bewegbar ist, und aus einer Betätigungsvorrichtung zur Bewegung des Verschlußgliedes (16), mit einer Hauptvorrichtung zur winkelmäßigen Bewegung des Verschlußgliedes (16) um einer Achse (54) und mit einer bezüglich der Hauptbetätigungsvorrichtung bewegbaren Hilfsvorrichtung zur Bewegung des Verschlußgliedes (16) bezüglich der Achse (54) radial aus der Schließstellung vor der winkelmäßigen Bewegung, wobei das Verschließglied (16) und das Gehäuse (12) zusammenwirkende Dichtungseinrichtungen (22, 26) zur Abdichtung des Einlasses (18) aufweisen, die Vorrichtung zur winkelmäßigen Bewegung des Verschlußgliedes (16) einen oberen zylindrischen Hauptschaft (50) und einen unteren zylindrischen Hauptschaft (70) aufweist, die an einander gegenüberliegenden Seiten des Verschlußgliedes (16) angeordnet sind, dadurch gekennzeichnet, daß das Gehäuse (12) mit einer Inspektionsöffnung (130) versehen ist, daß die Vorrichtung zur radialen Bewegung des Verschlußgliedes (16) einen oberen Hilfsschaft (90) und einen unteren Hilfsschaft (100), die an einenander gegenüberliegenden Seiten des Verschlußgliedes (16) angeordnet sind, und eine Verbindungsstange (110) aufweist, die im Gehäuse (12) enthalten ist und den oberen Hilfsschaft (90) mit dem unteren Hilfsschaft (100) derart verbindet, daß der obere Hilfsschaft (90) und der untere Hilfsschaft (100) gleichzeitig bewegbar sind, wobei einer der Hilfsschäfte (90, 100) zylindrisch und mit einem in einer im Verschlußglied (16) gelagerten ersten Lagereinrichtung (42, 44) gelagerten Exzenterteil (94, 104) ausgebildet ist und der andere Hilfsschaft (100, 90) zylindrisch und mit wenigstens zwei Teilen ausgebildet ist, von denen einer (102, 92) bezüglich der Schäfte (70, 50) der Hauptbetätigungsvorrichtung konzentrisch und ein anderer Teil (104, 94) zylindrisch ist sowie eine Achse (96) besitzt, die bezüglich der Schäfte (70, 50) der Hauptbetätigungsvorrichtung exzentrisch ist, und wobei der obere (50) und der untere (70) Schaft der Hauptbetätigungsvorrichtung jeweils eine konzentrische Bohrung (62, 74) zur Aufnahme des betreffenden Schaftes (90, 100) der Hilfsbetätigungsvorrichtung aufweisen, und daß jeder Schaft (50, 70) der Hauptbetätigungsvorrichtung einen jochförmigen Endteil (52, 72) zur Aufnahme eines Ansatzes (32, 34) des Verschlußgliedes (16) aufweist, wobei bei einer radialen Bewegung des Verschlußgliedes (16) bezüglich der Achse (54) die Ansätze (32, 34) in den Jochen (52, 72) gleiten.

2. Ventil nach Anspruch 1, dadurch gekennzeichnet, daß die Dichtungseinrichtungen eine vom Verschlußglied (16) getragene austauschbare Dichtung (26) zum Zusammenwirken mit dem Gehäuse (12) zur Abdichtung des Einlasses (18) aufweist und eine Bewegung der Betätigungsvorrichtung eine winkelmäßige Bewegung des Verschlußgliedes (16) um die Achse (54) bewirkt, um die austauschbare Dichtung (26) mit der Inspektionsöffnung (130) zum Fluchten zu bringen, wobei die austauschbare Dichtung (26) durch die Inspektionsöffnung (130) austauschbar ist.

3. Ventil nach Anspruch 1 oder 2, dadurch gekennzeichnet, daß das Verschließglied (16) eine Fläche (24) zur zusammenwirkenden dichten Anlage an der Inspektionsöffnung (130) aufweist.

4. Ventil nach den Ansprüchen 1 bis 3, dadurch gekennzeichnet, daß das Ventil ein in der Inspektionsöffnung (130) des Gehäuses (12) montiertes Halteglied (134) für eine Wartungsdichtung, eine von dem Halteglied (134) getragene, zur dichten Anlage an dem Verschlußglied (16) ausgebildete Wartungsdichtung (132) und eine Deckelplatte (138) zur Abdichtung der Inspektionsöffnung (130) aufweist.

5. Ventil nach Anspruch 4, dadurch gekennzeichnet, daß das Verschlußglied (16) mit einer Dichtfläche (24) versehen ist, von der ein erster Abschnitt eine ringförmige Hauptdichtung (26) zur Anlage am Einlaß (18) bildet und ein zur Hauptdichtung (26) konzentrischer zweiter Abschnitt zur dichten Anlage an der Wartungsdichtung (132) dient, welche Wartungsdichtung (132) aus einem Ringglied besteht, dessen Innendurchmesser größer als der Außendurchmesser der ringförmigen Hauptdichtung (26) ist.

6. Ventil nach den Ansprüchen 1 bis 5, dadurch gekennzeichnet, daß jeder Hauptschaft (50, 70) einen Schlitz (111) zur Beweglichkeit der Verbindungsstange (110) bei einer Relativbewegung der Hilfsschäfte (90, 100) bezüglich der Hauptschäfte (50, 70) begrenzt.

**Revendications pour les Etats Contractants: AT, CH/LI, LU, SE**

1. Vanne destinée à être utilisée dans une conduite, comprenant un boîtier (12) ayant une entrée (18), une sortie (20) et une chambre interne destinée à recevoir un obturateur (16), un obturateur (16) contenu dans le boîtier (12), cet obturateur (16) étant déplaçable d'une position de fermeture arrêtant l'écoulement de fluide à travers ladite vanne à une position d'ouverture permettant l'écoulement de fluide à travers ladite vanne, et des moyens de manoeuvre pour déplacer ledit obturateur (16), comportant des moyens principaux de déplacement dudit obturateur (16) angulairement autour d'un axe (54) et des moyens auxiliaires déplaçables par rapport auxdits moyens de manoeuvre principaux pour déplacer ledit obturateur (16) radialement par rapport audit axe en l'écartant de la position de fermeture avant ledit mouvement angulaire, ledit obturateur (16) et ledit boîtier (12) ayant des moyens d'étanchéité (22, 26) coopérant pour obturer ladite entrée (18), les moyens destinés à déplacer ledit obturateur (16) angulairement comportant une tige principale cylindrique supérieure (50) et une tige cylindrique principale inférieure (70) disposées de part et d'autre dudit obteurateur (16), caractérisée en ce que ledit boîtier (12) est muni d'un trou d'inspection (130), en ce que lesdits moyens de déplacement de l'obturateur (16) radialement comportent une tige auxiliaire supérieure (90) et une tige auxiliaire inférieure (100) placées de part et d'autre dudit obturateur (16) et une barre de liaison (110) contenue dans ledit boîtier (12) et reliant ladite tige auxiliaire supérieure (90) et ladite tige auxiliaire inférieure (100) de telle façon que ladite tige auxiliaire supérieure (90) et ladite tige auxiliaire inférieure (100) puissent se déplacer simultanément, une des tiges auxiliaires (90, 100) étant cylindrique et ayant une partie excentrée (94, 104) glissant dans des premiers moyens formant paliers (42, 44) ménagés dans ledit obturateur (16) et l'autre tige auxiliaire (100, 90) étant cylindrique et ayant au moins deux parties dont l'une (102, 92) est concentrique auxdites tiges (70, 50) des moyens de manoeuvre principaux et dont l'autre (104, 94) est cylindrique et a un axe (96) excentré par rapport auxdites tiges (70, 50) desdits moyens de manoeuvre principaux, les tiges supérieure (50) et inférieure (70) desdits moyens de manoeuvre principaux ayant chacune un trou concentrique (62, 74) destiné à recevoir une tige respective (90, 100) desdits moyens de manoeuvre auxiliaires.

2. Vanne selon la revendication 1, caractérisée en ce que lesdits moyens d'étanchéité comprennent un joint remplaçable (26) monté dans l'obturateur (16) et destiné à coopérer avec ledit boîtier (12) pour fermer de façon étanche ladite entrée (18), le déplacement desdits moyens de manoeuvre provoquant un mouvement angulaire dudit obturateur (16) autour dudit axe (54) pour amener le joint replaçable (26) en alignement avec le trou d'inspection (130), de sorte que ledit joint remplaçable (26) peut être remplacé à travers ledit trou d'inspection (130).

3. Vanne selon la revendication 1 ou la revendication 2, caractérisée en ce que ledit obturateur (16) comprend une surface (24) destinée à coopérer avec ledit trou d'inspection (130) et à s'appliquer de façon étanche contre lui.

4. Vanne suivant l'une quelconque des revendications précédentes, caractérisée en ce que ladite vanne comprend un organe de retenue de joint de maintenance (134) monté dans ledit trou d'inspection (130) dudit boîtier (12), un joint de maintenance (132) porté par ledit organe de retenue de joint de maintenance (134), ledit joint de maintenance (132) étant prévu pour s'appliquer de façon étanche contre ledit obteurateur (16), et une plaque de fermeture (138) pour fermer de façon étanche le trou d'inspection (130).

5. Vanne selon la revendication 4, caractérisée en ce que ledit obturateur (16) est muni d'une surface d'étanchéité (24), une première partie de ladite surface d'étanchéité (24) comprenant un joint principal annulaire (26) destiné à s'appliquer de façon étanche contre ladite entrée (18), une seconde partie concentrique avec le joint annulaire (26) destiné à s'appliquer de façon étanche contre le joint de maintenance (132); ledit joint de maintenance (132) comprenant un organe annulaire dont le diamètre interne est plus grand que le diamètre externe dudit joint principal annulaire (26).

6. Vanne selon l'une quelconque des revendications précédentes, caractérisée en ce que ledit obturateur (16) comprend un bossage (32, 34) destiné à s'adapter auxdits moyens de manoeuvre, chacune desdites tiges (50, 70) desdits moyens de manoeuvre principaux ayant une partie terminale en étrier (52, 72) pour recevoir ledit bossage (32, 34) dudit obturateur (16) de sorte que, lors d'un mouvement radial dudit obturateur (16) par rapport audit axe (54), ledit bossage (32, 34) peut coulisser à l'intérieur dudit étrier (52, 72).

7. Vanne selon l'une quelconque des revendications précédentes, caractérisée en ce que chacune desdites tiges principales (50, 70) délimite une fente (111) destinée à permettre le déplacement de ladite barre de liaison (110) en cas de mouvement relatif desdites tiges auxiliaires (90, 100) par rapport auxdites tiges principales (50, 70).

**Revendications pour les Etats Contractants: BE, DE, FR, IT, NL, GB**

1. Vanne destinée à être utilisée dans une conduite, comprenant un boîtier (12) ayant une entrée (18), une sortie (20) et une chambre interne destinée à recevoir un obturateur (16), un obturateur (16) contenu dans le boîtier (12), cet obturateur (16) étant déplaçable d'une position de fermeture arrêtant l'écoulement de fluide à travers ladite vanne à une position d'ouverture permettant l'écoulement de fluide à travers ladite vanne, et des moyens de manoeuvre pour déplacer ledit obturateur (16), comportant des moyens principaux de déplacement dudit obturateur (16) angulairement autour d'un axe (54) et des moyens auxiliaires déplaçables par rapport auxdits moyens de manoeuvre principaux pour déplacer ledit obturateur (16) radialement par rapport audit

11

axe en l'écartant de la position de fermeture avant ledit mouvement angulaire, ledit obturateur (16) et ledit boîtier (12) ayant des moyens d'étanchéité (22, 26) coopérant pour obturer ladite entrée (18), les moyens destinés à déplacer ledit obturateur (16) angulairement comportant une tige principale cylindrique supérieure (50) et une tige cylindrique principale inférieure (70) disposées de part et d'autre dudit obturateur (16), caractérisée en ce que ledit boîtier (12) est muni d'un trou d'inspection (130), en ce que lesdits moyens de déplacement de l'obturateur (16) radialement comportent une tige auxiliaire supérieure (90) et une tige auxiliaire inférieure (100) placées de part et d'autre dudit obturateur (16) et une barre de liaison (110) contenue dans ledit boîtier (12) et reliant ladite tige auxiliaire supérieure (90) et ladite tige auxiliaire inférieure (100) de telle façon que ladite tige auxiliaire supérieure (90) et ladite tige auxiliaire inférieure (100) puissent se déplacer simultanément, une des tiges auxiliaires (90, 100) étant cylindrique et ayant une partie excentrée (94, 104) glissant dans des premiers moyens formant paliers (42, 44) ménagés dans ledit obturateur (16) et l'autre tige auxiliaire (100, 90) étant cylindrique et ayant au moins deux parties dont l'une (102, 92) est concentrique auxdites tiges (70, 50) des moyens de manoeuvre principaux et dont l'autre (104, 94) est cylindrique et a un axe (96) excentré par rapport auxdites tiges (70, 50) desdits moyens de manoeuvre principaux, les tiges supérieure (50) et inférieure (70) desdits moyens de manoeuvre principaux ayant chacune un trou concentrique (62, 74) destiné à recevoir une tige respective (90, 100) desdits moyens de manoeuvre auxiliaires, et en ce que chacune desdites tiges (50, 70) desdits moyens de manoeuvre principaux a une partie terminale en étrier (52, 72) pour recevoir un bossage (32, 34) dudit obturateur (16) de sorte que, lors d'un mouvement radial dudit obturateur (16) par rapport audit axe (54), ledit bossage (32, 34) peut coulisser à l'intérieur dudit étrier (52, 72).

2. Vanne selon la revendication 1, caractérisée en ce que lesdits moyens d'échanchéité comprennent un joint remplaçable (26) monté dans l'obturateur (16) et destiné à coopérer avec ledit boîtier (12) pour fermer de façon étanche ladite entrée (18), le déplacement desdits moyens de manoeuvre provoquant un mouvement angulaire dudit obturateur (16) autour dudit axe (54) pour amener le joint remplaçable (26) en alignement avec le trou d'inspection (130), de sorte que ledit joint remplaçable (26) peut être remplacé à travers ledit trou d'inspection (130).

3. Vanne selon la revendication 1 ou la revendication 2, caractérisée en ce que ledit obturateur (16) comprend une surface (24) destinée à coopérer avec ledit trou d'inspection (130) et à s'appliquer de façon étanche contre lui.

4. Vanne suivant l'une quelconque des revendications précédentes, caractérisée en ce que ladite vanne comprend un organe de retenue de joint de maintenance (134) monté dans ledit trou d'inspection (130) dudit boîtier (12), un joint de maintenance (132) porté par ledit organe de retenue de joint de maintenance (134), ledit joint de maintenance (132) étant prévu pour s'appliquer de façon étanche contre ledit obturateur (16), et une plaque de fermeture (138) pour fermer de façon étanche le trou d'inspection (130).

5. Vanne selon la revendication 4, caractérisée en ce que ledit obturateur (16) est muni d'une surface d'étanchéité (24), une première partie de ladite surface d'étanchéité (24) comprenant un joint principal annulaire (26) destiné à s'appliquer de façon étanche contre ladite entrée (18), une seconde partie concentrique avec le joint annulaire (26) destiné à s'appliquer de façon étanche contre le joint de maintenance (132); ledit joint de maintenance (132) comprenant un organe annulaire dont le diamètre interne est plus grand que le diamètre externe dudit joint principal annulaire (26).

6. Vanne selon l'une quelconque des revendications précédentes, caractérisée en ce que chacune desdites tiges principales (50, 70) délimite une fente (111) destinée à permettre le déplacement de ladite barre de liaison (110) en cas de mouvement relatif desdites tiges auxiliaires (90, 100) par rapport auxdites tiges principales (50, 70).

FIG.1

EP 0 159 799 B1

## FIG. 2

FIG. 3

FIG. 4